Europäisches Patentamt

(19) European Patent Office

Office européen des brevets

(11) Publication number: **0 047 183**

**A1**

(12) **EUROPEAN PATENT APPLICATION**

(21) Application number: **81304014.4**

(22) Date of filing: **02.09.81**

(51) Int. Cl.³: **H 02 J 7/04**
**H 02 J 7/12**

(30) Priority: **03.09.80 GB 8028455**

(43) Date of publication of application:
**10.03.82 Bulletin 82/10**

(84) Designated Contracting States:
**AT BE CH DE FR GB IT LI LU NL SE**

(71) Applicant: **REACTOMATIC LIMITED**
**Churchgate House 30 Churchgate**
**Bolton Greater Manchester BL1 1HS(GB)**

(72) Inventor: **Morris, Wilfred**
**39 Old Clough Lane Walkden**
**Worsley Greater Manchester(GB)**

(74) Representative: **Kinrade, John et al,**
**Marks & Clerk Scottish Life House Bridge Street**
**Manchester M3 3DP(GB)**

(54) A dry cell battery re-activator.

(57) The positive pole of dry cell battery B being recharged by the re-activator is connected to the positive D.C. output side of a full wave bridge rectifier 6 giving an un-smoothed cyclically varying D.C. output. The negative pole of the battery is connected by current path 14 to current path 16 to the collector of transistor 18 and by biasing resistance 22 and current path 20 to the transistor base connected to a high impedance winding 26 of transformer 28 having a low impedance winding 30 connected to the transistor emitter. The transistor turns on during each cycle of D.C. The current in winding 30 is a function of the battery impedance. Accordingly the voltage output of winding 26 is a function of the battery impedance and causes switch off of the transistor earlier in a D.C. cycle the lower the battery impedance is.

FIG. 1

Croydon Printing Company Ltd.

This invention relates to a dry cell battery re-activator.

Dry cell batteries are a convenient and safe source of electrical energy. However they are also expensive since once discharged it is normal to throw them away and replace them. The cost of replacing a dry cell battery several times soon becomes very high.

It is common practice to use dry cell batteries in security systems, for example in alarm systems and in security patrol-men's torches. When employed in this type of use the risk of a battery running flat whilst in operation must be avoided and therefore it is standard practice to replace the battery at regular intervals rather/than allow the battery to become obviously discharged before doing so. In the case of a security patrol-man's torch the batteries may be replaced as frequently as everyday. This clearly represents a considerable expenditure, especially to large security firms who hire out large numbers of security patrol-men.

It is an object of the present invention to provide a dry cell re-activator.

According to the invention there is provided a dry cell battery re-activator characterised in that D.C. current is applied to the battery to be recharged in a reverse direction to the normal discharge direction of the battery, and the reactivator comprises means to regulate the current through the battery whereby the current supplied to the battery is turned off according to the impedance presented by the battery.

Preferably the D.C. current is cyclically varying D.C. and the switching means comprises a transistor which is turned off by a transformer having a primary winding energised by current which is a function of the battery impedance, and a secondary winding providing an electrical output causing the transistor to turn off in the course of a D.C. cycle.

The invention will now be further described by way of example with reference to the accompanying drawings in which:-

Fig. 1 is a circuit diagram of a battery re-activator formed according to the invention;

Fig. 2 is a circuit diagram of another embodiment of battery re-activator formed according to the invention, and

Fig. 3 is the circuit in Fig. 2 connected up in one particular way.

In the aforementioned drawings like or corresponding parts are indicated by like references.

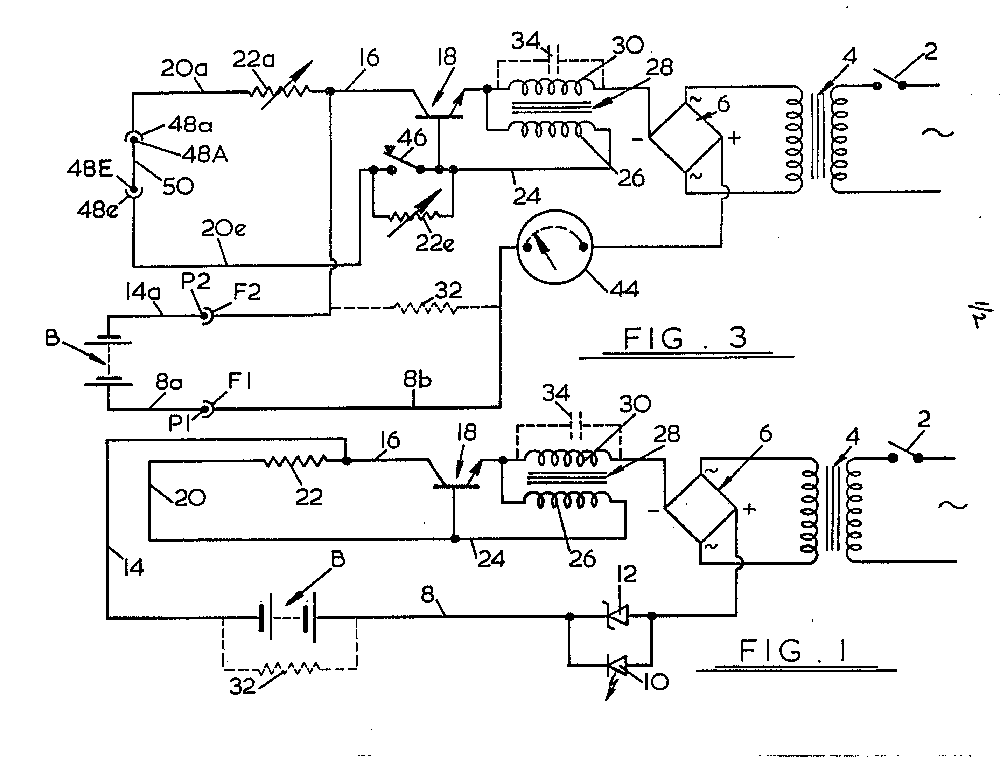

With reference to Fig. 1 mains A.C. is supplied via switch 2 to a transformer 4 giving an output voltage in excess of the rated voltage of dry cell battery B it is intended to re-charge. The transformer output at mains frequency is applied to a full-wave bridge rectifier 6 giving a cyclically varying D.C. output at twice the mains frequency. The positive terminal of rectifier 6 is detachably connected through line 8 to the positive terminal of the battery B. Included in line 8 is a light emitting diode 10 shunted by a Zener diode 12, the diode 10 being illuminated to indicate the battery is being supplied with re-charging current. The negative terminal of the battery B is detachably connected through current paths 14 and 16 to the collector of NPN transistor 18. Current paths 14, 16 are also connected to current path 20 including a resistance 22 connected to the base of the transistor. The base is also connected to current path 24 to secondary winding 26 of transformer 28, which secondary and primary winding 30 of this transformer are both connected to the emitter of transistor 18. The primary winding is finally connected to the negative side of rectifier 6.

The resistance 22 may be selectively variable but in any case has a pre-set or pre-determined value selected to appropriately bias the transistor 18 having regard to the range of impedance the battery B is likely to exhibit over a battery condition ranging from the battery having very little charge (and therefore requiring to be recharged) up to fully charged. Current through the transistor is a function of the battery impedance and the value of resistance 22.

Secondary winding 26 is of high impedance compared with that of the primary winding 30 and can have several times the number of turns of the primary winding.

During each cycle of D.C. voltage output from rectifier 6, the voltage between the collector and base rises to a value which switches on transistor 18 giving an output to primary winding 30, which output is a function of the impedance of battery through which current passes to recharge it whilst the transistor is on. The voltage induced in secondary winding 26 is therefore a function of the battery impedance. The lower the battery impedance the greater the induced voltage. Consequently during each cyclical output from rectifier 6 the relative voltage of the base of transistor 18 is pulled down by the output from winding 26 causing the transistor to switch off to interrupt the recharging current through the battery for the final part of that cycle of output from the rectifier 6. Accordingly the lower the battery impedance (i.e. the less charge the battery has stored), the less time the transistor is on so avoiding the application of a relatively massive and harmful current to the battery on charge.

If desired the battery B can be shunted by a resistance 32 having a relatively high value compared to the battery impedance. Resistance 32 provides a load through which the battery can discharge a little during the period transistor 18 is off. Such discharge enables a metal, for example zinc, electrode in the battery, to become electro-polished to improve the ability of the battery to retain its recharge.

Also if desired, a capacitor 34 can be provided in parallel with winding 30 to form an oscillator circuit giving a signal frequency which can be in the ultrasonic range. The output voltage of winding 26 varies at the frequency of the oscillator circuit during each output cycle of rectifier 6 when the transistor is on. Thus the charging current through the battery also fluctuates with a component at the frequency of the oscillator.

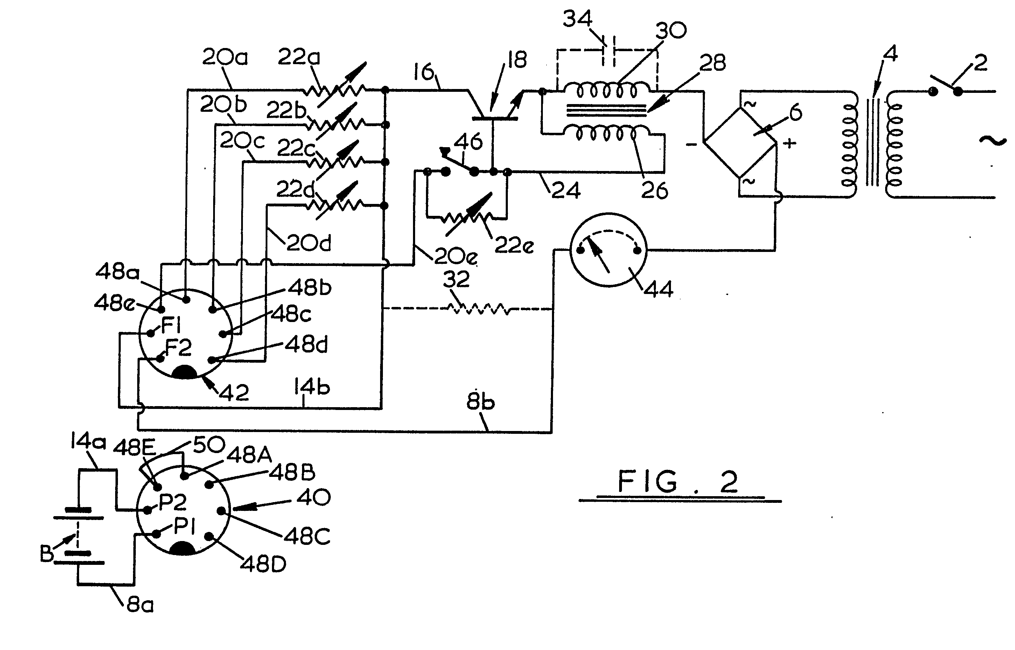

In the arrangement in Fig. 2, opposite terminals of battery B are detachably connected to respective conducting paths 8a and 14a forming a lead connected to pins P1 and P2 of a plug 40 which mates with a socket 42 provided on the re-activator so that female connectors F1 and F2 receive the pins P1 and P2 respectively thus (i) connecting the positive pole of the battery to the positive side of rectifier 6 by conducting path 8a and conducting path 8b connected to connector F1 and (ii) connecting the negative pole of the battery to the collector of transistor 18 by conducting path 14a and conducting path 14b connected to connector F2.

Conducting path 8b includes a volt- or ammeter 44 giving visual indication when the battery is on charge.

Batteries of different voltage ratings (for example 1.5 volts, 3.0 volts, 4.5 volts etc.) exhibit different impedances. Accordingly the value of the biasing resistance of the transistor 18 must be appropriate to the impedance of the battery being charged. The re-activator in Fig. 2 may be used to recharge batteries of eight different voltage ratings.

Transistor 18 can be biased by any one of resistances 22a, 22b, 22c or 22d each of a different pre-set value or by any one of those resistances in series with the resistance 22e of pre-determined value when switch 46 is open. The resistances 22a, 22b, 22c and 22d are connected by respective current paths 20a, 20b, 20c and 20d to respective female connectors 48a, 48b, 48c and 48d in socket 42, whereas the resistance 22e and switch 46 is parallel are connected by current path 20e to female connector 48e. Pins 48A, 48B, 48C, 48D and 48E on plug 40 mate with the respective connectors 48a, 48b, 48c, 48d and 48e of the socket.

To select one of the resistances 22a to 22d a conducting link 50 is connected between common pin 48E and the appropriate one of pins 48A to 48D. The link 50 is provided in the plug 40 which connects the battery B to the re-activator through the socket 42. A different lead comprising current paths 8a and 14a is provided with each of four different plugs 40, these plugs being different in as much as the corresponding link 50 in each connects a different one of pins 48A to 48D to the pin 48E of that plug. As will be understood each of these plugs can be used to select the appropriate biasing resistance value of the transistor for two different voltage ratings of two different batteries to be recharged, one resistance value being when switch 46 is open and the other value being when that switch is closed.

Fig. 3 shows the circuit established by connecting the plug and socket 40, 42 in Fig. 2 to include in the network the biasing resistances 22a and 22e in series.

The reactivator may be used to recharge simultaneously a number of batteries in series, or several reactivator circuits may be provided in a common casing to recharge independently a plurality of separate batteries or sets of batteries simultaneously.

CLAIMS

1.    A dry cell battery reactivator characterised in that D.C. current is applied to the battery to be recharged, in a reverse direction to the normal discharge direction of the battery, and the reactivator comprises means to regulate the current through the battery whereby the current supplied to the battery is turned off according to the impedance presented by the battery.

2.    A dry cell battery reactivator as claimed in Claim 1, characterised in that a source of cyclically varying D.C. current is provided for applying the D.C. current to the battery, and the means to regulate the current through the battery comprises a transistor which is turned off by a transformer having a primary winding energised by current which is a function of the battery impedance and a secondary winding providing an electrical output causing the transistor to turn off in the course of a D.C. cycle.

3.    A dry cell battery reactivator as claimed in Claim 2, characterised in that the primary winding is connected to the emitter of the transistor and the secondary winding is included in an emitter-base circuit of the transistor.

4.    A dry cell battery reactivator as claimed in Claim 2 or Claim 3, characterised in that the primary winding is of lower resistance than the secondary winding.

5.    A dry cell battery reactivator as claimed in any one of Claims 2 to 4, characterised in that the secondary winding has a greater number of turns than the primary winding.

6.    A dry cell battery reactivator as claimed in

9.

0047183

any one of claims 2 to 5, characterised in that an oscillatory circuit is formed by capacitor means in combination with the transformer.

7. A dry cell battery reactivator as claimed in any one of claims 2 to 6, characterised in that a load resistance is provided for connection between opposite poles of a said battery to be recharged whereby the battery being recharged can undergo discharge through said load when the transistor is in turned-off state.

8. A dry cell battery reactivator as claimed in any one of Claims 2 to 7, characterised in that a first electrically conducting path for connection to a positive pole of a said battery to be recharged divides into second and third conducting paths, of which the second path is connected to a collector of the transistor and the third path is connected to a base of the transistor, and the third path includes biasing resistance means.

9. A dry cell battery reactivator as claimed in Claim 8, characterised in that the resistance value of the biasing resistance means is selectively variable.

10. A dry cell battery reactivator as claimed in any one of the preceding claims, characterised in that the D.C. current is produced by full wave rectification of A.C. without substantial smoothing of the rectified current.

FIG. 1

FIG. 3

FIG. 2

0047183

## DOCUMENTS CONSIDERED TO BE RELEVANT

| Category | Citation of document with indication, where appropriate, of relevant passages | Relevant to claim |
|---|---|---|
| X | GB - A - 2 000 394 (N.V. PHILIPS)<br>* Page 2, line 70 - page 3, line 5; fig. 2 * | 1,2 |
| | US - A - 3 869 657 (SHOJI)<br>* Column 2, line 33 - column 5, line 58; fig. 1A * | 2-6 |
| | GB - A - 2 036 473 (SAFT)<br>* Page 1, lines 80-105; fig. 1 * | 2,8,10 |
| | US - A - 3 875 490 (ACKERMANN)<br>* Column 2, lines 54-66; fig. 1 * | 7-9 |

**CLASSIFICATION OF THE APPLICATION (Int. Cl.³)**

H 02 J 7/04
H 02 J 7/12

**TECHNICAL FIELDS SEARCHED (Int. Cl.³)**

H 01 M 6/00
H 01 M 10/00
H 02 J 7/00
H 02 M 3/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | |
|---|---|
| X | The present search report has been drawn up for all claims |

| Place of search | Date of completion of the search | Examiner |
|---|---|---|
| VIENNA | 06-11-1981 | PIRKER |

EPO Form 1503.1  06.78